# EUROPÄISCHE PATENTSCHRIFT

(11) **EP 3 749 625 B1**
(45) Veröffentlichungstag und Bekanntmachung des Hinweises auf die Patenterteilung: **19.01.2022**
(21) Anmeldenummer: 19703658.5
(22) Anmeldetag: 30.01.2019
(51) Int. Cl.: C04B 35/56, C04B 35/565, C04B 35/626, C04B 35/634, C04B 41/00, C01B 32/914, C09D 1/00, C09D 7/61, C09D 7/40

(54) **VERFAHREN ZUR BESCHICHTUNG EINES SUBSTRATS MIT EINER WÄSSRIGEN SUSPENSION ENTHALTEND METALLCARBID-PARTIKEL**
METHOD OF COATING A SUBSTRATE WITH AN AQUEOUS SUSPENSION CONTAINING METAL CARBIDE PARTICLES
PROCEDE POUR REVETER UNE SUSPENSION AQUEUSE CONTENANT DES PARTICULES DE CARBURE MÉTALLIQUE

(30) Priorität: 06.02.2018 DE 102018201771
(43) Veröffentlichungstag der Anmeldung: 16.12.2020
(60) Teilanmeldung: 21214137.8
(73) Patentinhaber: FRAUNHOFER-GESELLSCHAFT zur Förderung der angewandten Forschung e.V., 80686 München (DE)
(72) Erfinder: SCHWANKE, Stanislaus, 90409 Nürnberg (DE); MÜLLER, Stephan, 91085 Weisendorf (DE); MEISSNER, Elke, 91058 Eckental (DE); EPELBAUM, Boris, 91086 Aurachtal (DE); REIMANN, Christian, 91058 Erlangen (DE); FRIEDRICH, Jochen, 90542 Eckental (DE); BECKER, Lucas, 94365 Parkstetten (DE)
(74) Vertreter: Pfenning, Meinig & Partner mbB
(86) Internationale Anmeldenummer: PCT/EP2019/052235
(87) Internationale Veröffentlichungsnummer: WO 2019/154690

(56) Entgegenhaltungen:
- WO-A1-2017/130134
- US-A1- 2006 040 064
- US-A1- 2009 295 048
- US-A1- 2012 282 469
- US-A1- 2013 061 800
- US-A1- 2015 152 012
- Vanderbilt: "Before using", , 28. Januar 2016 (2016-01-28), XP055586845, Gefunden im Internet: URL:https://www.vanderbiltminerals.com/ass ets/uploads/documents/technical/TDS_DARVAN _Dispersing_Agents_Web.pdf [gefunden am 2019-05-08]

## Beschreibung

Die vorliegende Erfindung betrifft ein Verfahren zur Beschichtung von Substraten unter Verwendung einer wässrigen Suspension.

Hochschmelzende Metallcarbide wie beispielsweise Titan-, Zirconium-, Hafnium-, Vanadium-, Niob-, Tantal-, Chrom-, Molybdän-, Wolfram- und Siliziumcarbid zeichnen sich durch ihre hohe mechanische, chemische und thermische Beständigkeit aus. Deshalb werden solche carbidischen Werkstoffe in Form von massiven, keramischen Körpern oder in Form von Beschichtungen vielfältig eingesetzt. So finden die carbidischen Werkstoffe Anwendung bei der Herstellung von Materialien bei hohen Temperaturen und/oder in chemisch aggressiven Umgebungen, bei der Herstellung von Schneidwerkzeugen oder auch Triebwerksdüsen und in der Kristallzüchtung.

Aufgrund ihrer mechanischen Härte sind die Metallcarbide jedoch schwer zu verarbeiten. Deshalb sind massive Formkörper mit komplexeren Geometrien aus diesen Materialien nicht oder nur schwierig und kostenintensiv herzustellen. Aus diesem Grund werden Bauteile meist mit den Metallcarbiden nur beschichtet.

Häufig eingesetzte Beschichtungsverfahren sind das CVD-Verfahren (Chemical Vapor Deposition) und PVD-Verfahren (Physical Vapor Deposition). Jedoch sind die über diese Verfahren erhältlichen Beschichtungen in der Regel nur maximal wenige Mikrometer dick, was aufgrund mangelnder Langzeitstabilität für bestimmte Anwendungen - wie zum Beispiel bei der Herstellung von Siliziumcarbid- oder Aluminiumnitrid-Kristallen - nicht ausreichend ist.

Im Stand der Technik sind auch metallcarbidische Beschichtungen beschrieben, die über einen nasskeramischen Prozess hergestellt werden, bei dem eine organische Suspension aus Metallcarbid-Partikeln auf die zu beschichtenden Bauteile durch Streichen, Sprühen oder Tauchen aufgebracht wird, wonach ein Sinterprozess erfolgt.

US 2013/0061800 A1 beschreibt ein hochtemperaturstabiles Element, welches ein Graphitsubstrat beinhaltet dieses enthält isotropen Graphit. Außerdem umfasst das hochtemperaturstabile Element eine Carbidbeschichtung, welche ein Carbid, so wie Tantalcarbid, beinhaltet. Weiterhin werden Verfahren zur Herstellung dieses Elements beschrieben, bei denen die Carbidpartikel aus einer Suspension auf dem Substrat abgeschieden werden. Dabei werden Suspensionen mit einem organischen Lösungsmittel als flüssige Phase verwendet. US2006/040064 zeigt eine wässrige Suspension 48 Gew.-% trockenen Material enthaltend. Das trockene Material ist TiC. 1.13 Gew.-% NH3CO2 Dispergierungsmittel ist enthalten. Zwei TiC-Pulver mit einer mittleren Partikelgrösse von 1 und 7 Mikron werden verwendet. Die Suspensionen werden auf Graphit- oder Glassubstraten aufgebracht, getrocknet und gesintert, was zu homogenen und dichten Beschichtungen führt.

Nasskeramische Verfahren zur Beschichtung von Graphit mit Tantalcarbid werden auch von D. Nakamura, T. Kimura, T. Narita, A. Suzumura, T. Kimoto und K. Nakshima im Journal of Crystal Growth, Vol. 478, 2017 auf den Seiten 163 bis 173 sowie von D. Nakamura, K. Shigetoh und von A. Suzumura im Journal of the European Ceramic Society, Vol. 37, 2017 auf den Seiten 1175 bis 1185 beschrieben. In den offenbarten Verfahren erfolgt die Abscheidung von Tantalcarbid aus Suspensionen, die auf organischen Lösungsmitteln basieren.

Über die aus dem Stand der Technik bekannten nasskeramischen Verfahren lassen sich relativ dicke Schichten erzeugen, die Schichtdicken von teilweise mehreren 100 Mikrometern aufweisen. Im Gegensatz zu den über CVD- oder PVD-Verfahren hergestellten Schichten, zeigen die über nasskeramische Verfahren hergestellten Schichten eine isotrope Textur mit zufälliger Korngrößenorientierung, was zu einer verminderten Anfälligkeit für Rissbildung und zu einer Erhöhung des Diffusionswegs für substratschädigende Spezies führt.

Suspensionen basierend auf organischen Lösungsmitteln weisen jedoch wesentliche Nachteile auf. Neben ökologischen und gesundheitlichen Aspekten - aufgrund der Toxizität der organischen Lösungsmittel - bringt der Einsatz dieser Suspensionen zusätzlich das sicherheitstechnische Problem leicht entflammbarer Sprühnebel mit sich. Außerdem müssen die organischen Lösemittel zur Entfernung pyrolisert werden. Dies führt zum ungewünschten Eintrag von Fremdstoffen in die Beschichtung. Weiterhin ist aus den bekannten Suspensionen kein kontrollierter Auftrag der Suspension möglich, dies gilt insbesondere für Sprühverfahren, da die Suspensionseigenschaften während dieses Vorgangs durch Verdampfung des Lösemittels schwanken können, so dass über die Zeit keine homogenen Schichten erhalten werden können.

Es wäre weiterhin wünschenswert, das Verhältnis offener zu geschlossener Poren einer Carbidbeschichtung beeinflussen zu können, was durch die bekannten Suspensionen auf Basis organischer Lösungsmittel nur bedingt möglich ist. Außerdem ist es erstrebenswert, eine höhere Infiltrationstiefe der Beschichtung ausgehend von der Substratoberfläche erreichen zu können.

Ausgehend davon bestand die Aufgabe vorliegender Erfindung darin ein Verfahren zur Beschichtung von Substraten bereitzustellen, in dem Suspensionen verwendet werden, die keine ökologischen, gesundheitlichen und sicherheitstechnischen Probleme mit sich bringen. Weiterhin sollen mit dem Verfahren Beschichtungen hergestellt werden können, die sehr rein sind und keinen Pyrolyseschritt erfordern. Außerdem sollen mit dem Verfahren aus den Suspensionen über die Zeit sehr homogene Schichten abgeschieden werden können und es soll möglich sein, das Verhältnis zwischen offenen und geschlossenen Poren einer aus der Suspension abgeschiedenen Beschichtung steuern zu können. Des Weiteren soll die Infiltrationstiefe einer aus der Suspension abgeschiedenen Beschichtung ausgehend von der Oberfläche des zu beschichtenden Substrats erhöht werden. Außerdem sollen die Beschichtungen eine geringe Gasdurchlässigkeit aufweisen, einen hohen thermischen Schockwiderstand zeigen und stabil gegenüber einer chemisch aggressiven Atmosphäre sein.

Die ökologischen, gesundheitlichen und sicherheitstechnischen Probleme, die durch die Verwendung von Suspensionen mit organischen Lösungsmitteln als flüssige Phase resultieren, könnten sich durch Verwendung von Wasser als flüssige Phase ausräumen lassen.

Wasser wurde aber bislang aus einer Reihe von Gründen nicht als flüssige Phase für Metallcarbidsuspensionen in Betracht gezogen. Zum einen weisen Metallcarbide eine sehr hohe Dichte auf (Wolframcarbid 15,6 g/cm³, Tantalcarbid 13,9 g/cm³), wodurch eine sehr rasche Segregation auftritt. Um Schichten mit einer hohen Homogenität abzuscheiden, ist es aber zwingend erforderlich, dass die Metallcarbidpartikel in der Suspension in der Schwebe vorliegen.

Weiterhin ist für die benötigten hohen Feststoffanteile in einer wässrigen Suspension mit einer Agglomeration der Metallcarbidpartikel zu rechnen, was Risse und eine Reduktion der Gründichte in aus diesen Suspensionen abgeschiedenen Beschichtungen herbeiführt. Organische Lösungsmitteln hingegen vermögen eine Agglomeration - zumindest in gewissem Maße - über ihre funktionellen Gruppen zu unterdrücken.

Aufgabe der vorliegenden Erfindung ist es die oben genannten Probleme zu überwinden, die mit Wasser als flüssiger Phase auftreten.

Diese Aufgabe wird durch das Verfahren mit den Merkmalen von Patentanspruch 1 gelöst, welches die folgenden technischen Merkmale aufweist.

Verfahren zur Beschichtung eines Substrats umfassend die folgenden Schritte:
i) Bereitstellen eines Graphitsubstrats;
ii) Bereitstellen einer wässrigen Suspension enthaltend mindestens einen Tantalcarbid-Partikel und mindestens ein Dispergierungsmittel, wobei der Anteil des mindestens einen Tantalcarbid-Partikels im Bereich von 30 bis 95 Gew.-% bezogen auf das Gesamtgewicht der Suspension liegt;
iii) Aufbringen der Suspension aus Schritt ii) auf die Oberfläche des Graphitsubstrats aus Schritt i);
iv) Trocknung der aufgebrachten Suspension, wonach eine Beschichtung auf der Oberfläche des Graphitsubstrats entsteht.

Vorteilhafte Ausführungsformen dieses Verfahrens werden in den Ansprüchen 2 bis 9 angegeben.

### Begriffsdefinitionen

Bei einer "wässrigen Suspension" im Sinne der vorliegenden Erfindung wird als flüssige Phase Wasser verwendet. Dabei können bis zu 2 Gew.-%, bevorzugt bis zu 1 Gew.-% anderer Lösungsmittel anwesend sein. Besonders bevorzugt ist es aber, dass die flüssige Phase der "wässrigen Suspension" ausschließlich Wasser ist.

Unter der "mittleren Korngröße" gemäß der vorliegenden Erfindung wird der *d₅₀*-Wert verstanden, d.h. 50 % der Partikel weisen einen geringeren Partikeldurchmesser auf und die verbleibenden 50 % der Partikel zeigen einen größeren Partikeldurchmesser. Vorzugsweise wird die "mittlere Korngröße" durch Laserstreuung direkt an der Suspension bestimmt. Die Größe von Agglomeraten wird vorzugsweise durch Laserstreuung direkt an der Suspension ermittelt.

Unter der "Reinheit" der Tantalcarbidpartikel bzw. der Beschichtung, die aus diesen Partikeln gebildet wird, wird die chemische Reinheit bezogen auf Einzelelementverunreinigungen verstanden. Die Reinheit wird vorzugsweise über GDMS (Glow Discharge Mass Spectrometry) bestimmt.

Unter der "Gründichte" der Beschichtung wird im Sinne der vorliegenden Erfindung die Dichte der hergestellten Schicht bezogen auf die theoretische Dichte einer gesinterten Tantalcarbid-Schicht verstanden.

### Mengenangaben

Die im erfindungsgemäßen Verfahren verwendete wässrige Suspension enthält neben der flüssigen Phase Wasser auch mindestens einen Tantalcarbid-Partikel, mindestens ein Dispergiermittel und optional Zusatzstoffe. Die Mengenangaben beziehen sich jeweils auf das Gesamtgewicht der Suspension und die Gesamtmenge der anwesenden Komponenten ergänzt sich zu 100 Gew.-%

### Wässrige Suspension

Die wässrige Suspension enthält mindestens einen Tantalcarbid-Partikel und mindestens ein Dispergierungsmittel, wobei der Anteil des mindestens einen Tantalcarbid-Partikels im Bereich von 30 bis 95 Gew.-% bezogen auf das Gesamtgewicht der Suspension liegt. Der Anteil an Tantalcarbid-Partikeln wird vorzugsweise durch Entfernen der flüchtigen Bestandteile aus der Suspension bestimmt, was vorzugsweise durch Erhitzen der Suspension auf eine Temperatur erfolgt, die oberhalb der Verdampfungstemperatur von Wasser liegt. Der Anteil der Tantalcarbid-Partikel kann über die Einwaage festgelegt werden.

Im Folgenden werden bevorzugte Ausführungsformen der wässrigen Suspension angegeben.

Es ist bevorzugt, dass der mindestens eine Tantalcarbid-Partikel eine mittlere Korngröße im Bereich von 0.05 bis 25 µm, besonders bevorzugt von 0.5 bis 5 µm und insbesondere bevorzugt von 1 bis 2 µm aufweist.

Weiterhin ist es bevorzugt, dass der mindestens eine Tantalcarbid-Partikel einen Anteil von < 300 ppm, bevorzugt < 10 ppm und insbesondere bevorzugt von kleiner als 1 ppm an Einzelelementverunreinigungen aufweist. Sofern die Tantalcarbid-Partikel nicht in ausreichender Reinheit kommerziell verfügbar sind, können diese über die dem Fachmann bekannten Verfahren, wie nasschemische Reinigung, gereinigt werden. Außerdem entspricht die Reinheit der aus einer wässrigen Suspension abgeschiedenen Beschichtung nicht zwingend der Reinheit der eingesetzten Tantalcarbid-Partikel. Über das erfindungsgemäße Verfahren ist ein Austrag von Verunreinigungen möglich.

Besonders bevorzugt ist es, dass der mindestens eine Tantalcarbid-Partikel eine mittlere Korngröße im Bereich von 0.05 bis 25 µm, insbesondere bevorzugt von 0.5 bis 5 µm und ganz besonders bevorzugt von 1 bis 2 µm aufweist und einen Anteil von < 300 ppm, bevorzugt < 10 ppm und insbesondere bevorzugt von kleiner als 1 ppm an Einzelelementverunreinigungen aufweist.

Das Tantalcarbid weist insbesondere bevorzugt einen Phasenanteil der kubischen Phase von 70 bis 100 % auf.

Eine andere bevorzugte Ausführungsform sieht vor, dass das Dispergierungsmittel ausgewählt ist aus der Gruppe bestehend aus Polyacrylsäure, die bevorzugt ein zahlenmittleres Molekulargewicht im Bereich von 3000 bis 10000 g/mol und besonders bevorzugt von 4000 bis 6000 g/mol aufweist, Tetrabutylammoniumhydroxid und Mischungen davon.

Gemäß einer anderen bevorzugte Ausführungsform der vorliegenden Erfindung enthält diese zumindest einen Zusatzstoff, der bevorzugte ausgewählt ist aus der Gruppe bestehend aus Basen, insbesondere Natronlauge, Entschäumern, insbesondere Fettalkoholpolyalkylenglykolethern, Sinterhilfsmitteln, insbesondere Kobalt oder Silicium, und Mischungen davon. Besonders bevorzugte Zusatzstoffe sind dabei Entschäumer. Durch deren Einsatz wird Blasenbildung in der Suspension unterdrückt, was eine verringerte Rissbildung nach sich zieht.

Eine weitere bevorzugte Ausführungsform vorliegender Erfindung sieht vor, dass der Anteil der Tantalcarbid-Partikel im Bereich von 40 bis 90 Gew.-% und bevorzugt von 60 bis 85 Gew.-% bezogen auf das Gesamtgewicht der Suspension liegt.

Eine andere bevorzugte Ausführungsform der vorliegenden Erfindung sieht vor, dass der Anteil des Dispergierungsmittels im Bereich von 0,05 bis 5 Gew.-% und bevorzugt von 0,1 bis 2 Gew.-% bezogen auf das Gesamtgewicht der Suspension liegt.

Nach einer weiteren bevorzugten Ausführungsform der vorliegenden Erfindung liegt der Anteil von Zusatzstoffen in der Suspension im Bereich von 0 bis 10 Gew.-% und bevorzugt von 0,5 bis 5 Gew.-% bezogen auf das Gesamtgewicht der Suspension.

Gemäß einer anderen bevorzugten Ausführungsform vorliegender Erfindung liegt der Anteil der Tantalcarbid-Partikel im Bereich von 40 bis 90 Gew.-% und bevorzugt von 60 bis 85 Gew.-%, der Anteil des Dispergierungsmittels im Bereich von 0,05 bis 5 Gew.-% und bevorzugt von 0,1 bis 2 Gew.-% und der Anteil von Zusatzstoffen in der Suspension im Bereich von 0 bis 10 Gew.-% und bevorzugt von 0,5 bis 5 Gew.-% jeweils bezogen auf das Gesamtgewicht der Suspension.

Eine weitere bevorzugte Ausführungsform vorliegender Erfindung sieht vor, dass der pH-Wert der Suspension im Bereich von 5 bis 10 und bevorzugt von 7 bis 8 liegt. Wenn Polyacrylsäure als Dispergierungsmittel verwendet wird, liegt der pH-Wert bevorzugt im Bereich von 7 bis 8.

Gemäß einer weiteren bevorzugten Ausführungsform enthält die wässrige Suspension neben Wasser, Tantalcarbid-Partikeln, Dispergiermitteln und den oben angegebenen Zusatzstoffen keine weiteren Komponenten.

Nach einer weiteren bevorzugten Ausführungsform vorliegender Erfindung ist die wässrige Suspension vollkommen frei von organischen Lösemitteln.

### Verfahren

Das erfindungsgemäße Verfahren zur Beschichtung eines Substrats umfasst die folgenden Schritte:
i) Bereitstellen eines Graphitsubstrats;
ii) Bereitstellen einer wässrigen Suspension enthaltend mindestens einen Tantalcarbid-Partikel und mindestens ein Dispergierungsmittel, wobei der Anteil des mindestens einen Tantalcarbid-Partikels im Bereich von 30 bis 95 Gew.-% bezogen auf das Gesamtgewicht der Suspension liegt;
iii) Aufbringen der Suspension aus Schritt ii) auf die Oberfläche des Graphitsubstrats aus Schritt i);
iv) Trocknung der aufgebrachten Suspension, wonach eine Beschichtung auf der Oberfläche des Graphitsubstrats entsteht.

Im Folgenden werden bevorzugte Ausführungsformen des erfindungsgemäßen Verfahrens angegeben.

Nach einer bevorzugten Ausführungsform des Verfahrens gemäß vorliegender Erfindung ist das Graphitsubstrat Graphit mit einem angepasstem Wärmeausdehungkoffezienten im Bereich von 6,5 bis 7,5 ^{∗} 10⁻⁶ K⁻¹ und Mischungen hiervon.

Eine weitere bevorzugte Ausführungsform des erfindungsgemäßen Verfahrens sieht vor, dass das Verfahren die folgenden weiteren Schritte enthält:
v) Vorbehandlung des in Schritt i) bereitgestellten Graphitsubstrats vor Schritt iii), wobei die Vorbehandlung bevorzugt durch eine Maßnahme ausgewählt aus der Gruppe bestehend aus mechanischem Aufrauen der Oberfläche, thermischer Vorbehandlung der Oberfläche, chemischer Behandlung der Oberfläche und Mischungen davon, sowie anschließender Reinigung, insbesondere im Ultraschallbad, erfolgt;
vi) Sintern der nach Schritt iv) erhaltenen Beschichtung.

Um eine gute Haftung der Beschichtung auf dem Substrat zu erreichen, ist es besonders vorteilhaft das Substrat zunächst mechanisch aufzurauen und anschließend eine hydrophile Oberfläche durch entsprechende Reinigungsschritte im Ultraschallbad zu erzeugen. Insbesondere im Fall eines Graphitsubstrats ist auf eine Eliminierung oder zumindest eine Reduktion der Zahl loser Partikel auf der Oberfläche zu achten.

Nach einer anderen bevorzugten Ausführungsform erfolgt das Aufbringen der Suspension in Schritt iii) durch Pinseln, Tauchen oder Sprühen.

Bei der Sprühauftragung wird das Substrat bevorzugt mittig auf einem rotierbaren Drehtisch positioniert und mittels spezieller Halterungen fixiert. Je nach Geometrie des zu beschichtenden Substrats wird zusätzlich der Kippwinkel des Drehtisches und der Sprühwinkel der Sprühpistole mit einer dafür speziell vorgesehen Halterung angepasst. Unter fest definierten Sprühparametern (darunter dem Zerstäuberluftdruck, der Drosselung der Materialzufuhr über den Nadelhub sowie dem Abstand der Düsenöffnung zur Substratoberfläche) wird anschließend das Substrat mit der wässrigen Suspension beschichtet. Die Umdrehungszahl des Drehtisches während des Sprühvorganges orientiert sich dabei an der gewünschten Schichtdicke der späteren Beschichtung.

Gemäß einer weiteren bevorzugten Ausführungsform der vorliegenden Erfindung wird Schritt iv) bei einer Temperatur im Bereich von 100 bis 600°C, bevorzugt von 120 bis 550°C und besonders bevorzugt von 145 bis 455°C durchgeführt wird, wobei es bevorzugt ist, dass Schritt iv) über einen Zeitraum von 5 bis 40 Stunden und besonders bevorzugt von 20 bis 30 Stunden durchgeführt wird.

Um rissfreie Schichten zu erhalten, hat es sich als vorteilhaft erwiesen, die erhaltene Beschichtung in Schritt iv) über mehrere Temperaturschritte zu tempern. Dabei sind insbesondere Haltephasen bevorzugt, um ein zu rasches Trocknen mit der Folge von Rissbildung zu verhindern. Die spezifischen Haltephasen orientieren sich an dem Verdampfungsverhalten des verwendeten Dispergiermittels. Sofern Kobalt als Sinterhilfsmittel eingesetzt wird, ist es vorteilhaft den Trocknungsvorgang unter Inertgasatmosphäre durchzuführen.

Ein bevorzugter Trocknungsprozess iv) sieht die folgenden Temperatur- und Zeitintervalle vor:
(1) 140 bis 160°C für 2,5 bis 3,5 Stunden; dann
(2) 180 bis 220°C für 1,5 bis 2,5 Stunden; dann
(3) 2 Stunden verweilen bei der Temperatur aus (2); dann
(4) 200 bis 250°C für 1,5 bis 2,5 Stunden; dann
(5) 310 bis 350°C für 4,5 bis 5,5 Stunden; dann
(6) 330 bis 350°C für 1,5 bis 2,5 Stunden; dann
(7) 2 Stunden verweilen bei der Temperatur aus (6); dann
(8) 380 bis 420°C für 3,5 bis 4,5 Stunden; dann
(9) 430 bis 470°C für 1,5 bis 2,5 Stunden.

Gemäß einer anderen bevorzugten Ausführungsform der vorliegenden Erfindung wird Schritt vi) (= Sintern) bei einer Temperatur im Bereich von 2000 bis 2600°C, bevorzugt von 2100 bis 2500°C und besonders bevorzugt von 2200 bis 2300°C durchgeführt. Dabei ist es besonders bevorzugt, dass Schritt vi) über einen Zeitraum von 1 bis 10 Stunden und besonders bevorzugt von 3 bis 5 Stunden durchgeführt wird. Weiterhin ist es bevorzugt Schritt vi) bei einem Druck im Bereich von 500 bis 900 Torr (6,66 × 10⁴ bis 12,0 × 10⁴ Pascal) bevorzugt von 600 bis 800 Torr (8,00 × 10⁴ bis 10,7 × 10⁴ Pascal) und insbesondere bevorzugt von 680 bis 720 Torr (9,07 × 10⁴ bis 9,60 × 10⁴ Pascal) durchzuführen.

Nach einer anderen bevorzugten Ausführungsform der vorliegenden Erfindung wird Schritt vi) unter Inertgas durchgeführt wird, wobei das Inertgas besonders bevorzugt ausgewählt ist aus der Gruppe bestehend aus Helium, Argon, Stickstoff und Mischungen davon.

Die Zugabe von Sinterhilfsmitteln, wie Kobalt oder Silicium, erhöht das Flussverhalten beim Sinterprozess und die erreichbare Enddichte der Beschichtung.

Gemäß einer anderen bevorzugten Ausführungsform der vorliegenden Erfindung beträgt die Gründichte der Beschichtung vor Schritt v) mindestens 50 % und bevorzugt mindestens 60 %.

Eine weitere bevorzugte Ausführungsform sieht vor, dass die Beschichtung nach Schritt iv) oder vi) weniger als 300 ppm und bevorzugt weniger als 1 ppm an Einzelelementverunreinigungen enthält.

Gemäß einer anderen bevorzugten Ausführungsform weist die Beschichtung nach Schritt iv) oder vi) eine offene Porosität von kleiner 5 % und bevorzugt von kleiner 1 % auf. Diese wird bevorzugt über Hg-Porosimetrie bestimmt.

Gemäß einer anderen bevorzugten Ausführungsform vorliegender Erfindung liegt die Dicke der Beschichtung nach Schritt iv) oder vi) im Bereich von 20 bis 500 µm, bevorzugt von 50 bis 400 µm und besonders bevorzugt von bis 100 bis 300 µm.

Eine weitere bevorzugte Ausführungsform sieht vor, dass der pH-Wert der wässrigen Suspension vor Schritt iii) im Bereich von 5 bis 10 und bevorzugt von 7 bis 8, insbesondere für Polyacrylsäure als Dispergierungsmittel, liegt.

### Beschichtetes Substrat

Offenbart wird weiterhin ein beschichtetes Substrat herstellbar gemäß dem erfindungsgemäßen Verfahren.

Nach einer bevorzugten Ausführungsform liegt die Dicke der Beschichtung im Bereich von 20 bis 500 µm, bevorzugt von 50 bis 400 µm und besonders bevorzugt von 100 bis 300 µm.

Eine weitere bevorzugte Ausführungsform sieht vor, dass die Beschichtung nach Schritt iv) oder vi) weniger als 300 ppm und bevorzugt weniger als 1 ppm Verunreinigung enthält.

Gemäß einer anderen bevorzugten Ausführungsform weist die Beschichtung nach Schritt iv) oder vi) eine offene Porosität von kleiner 5 % und bevorzugt von kleiner 1 % auf.

### Verwendung

Die beschichteten Substrate finden Verwendung als carbidische Werkstoffe.

Bevorzugt sind dabei die Verwendungen in Anwendungen für die Kristallzüchtung, insbesondere Anwendungen für PVT-Verfahren (physikalische Dampfphase-Verfahren), Epitaxie-Verfahren und für Tiegel.

Anhand der nachfolgenden Beispiele soll der erfindungsgemäße Gegenstand näher erläutert werden, ohne diesen auf die hier gezeigten spezifischen Ausführungsformen einschränken zu wollen.

### Herstellung der wässrigen Suspension 1

Mittels eines Dispergierrührwerks wurde eine wässrige Tantalcarbid Suspension hergestellt. Hierzu wurde das Tantalcarbid-Pulver (70 Gew.-%, Gesamtverunreinigungsgehalt: 300 ppm, H.C. Starck), Polyacrylsäure (0,5 Gew.-%, M_{w} 5000 g/mol, Polyscience Europe GmbH), Sinterhilfe (0,7 Gew.-% Silizium, H.C. Starck), Entschäumer (2 Tropfen Contraspum, Zschimmer und Schwarz) etappenweise in destilliertes Wasser (28.8 Gew.-%) gegeben. Zwischen der Zugabe jeder einzelnen Komponente wurde die Suspension mittels eines Rührwerks für bis zu 15 Minuten bei 4000 Umdrehungen pro Minute bearbeitet, um die homogene Verteilung des Metallcarbidpulvers, des Dispergiermittels bzw. der verwendeten Additive in der Suspension sicherzustellen. Der pH-Wert der Suspension wurde mit Natronlauge auf pH 8 eingestellt. Der Anteil an Tantalcarbid betrug 70 Gew.-% bezogen auf das Gesamtgewicht der wässrigen Suspension.

### Herstellung der wässrigen Suspension 2

Mittels eines Dispergierrührwerks wurde eine wässrige Tantalcarbid Suspension hergestellt. Hierzu wurde das Tantalcarbid-Pulver (70 Gew.-%, Gesamtverunreinigungsgehalt: 300 ppm, H.C. Starck, Tetrabutylammoniumhydroxid (0,5 Gew.-%, Sigma Aldrich), Sinterhilfe (0,7 Gew.-% Silizium, H.C. Starck), Entschäumer (2 Tropfen Contraspum, Zschimmer und Schwarz) etappenweise in destilliertes Wasser (28,8 Gew.-%) gegeben. Zwischen der Zugabe jeder einzelnen Komponente wurde die Suspension mittels eines Rührwerks für bis zu 15 Minuten bei 4000 Umdrehungen pro Minute bearbeitet, um die homogene Verteilung des Metallcarbidpulvers, des Dispergiermittels bzw. der verwendeten Additive in der Suspension sicherzustellen. Der pH-Wert der Suspension betrug 7. Der Anteil an Tantalcarbid betrug 70 Gew.-% bezogen auf das Gesamtgewicht der wässrigen Suspension.

Mit den wässrigen Suspensionen 1 und 2 wurde ein Graphitsubstrat beschichtet.

Die Beschichtung erfolgte an einem Beschichtungsstand mit einem rotier- und verkippbaren Probentisch mithilfe einer Sprühpistole. Die Sprühpistole wurde mit 2 bar (2 × 10⁵ Pascal)

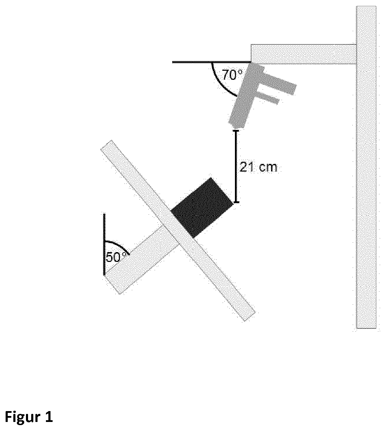

Druckluft betrieben und wurde an einer Halterung angebracht, welche es erlaubt, sowohl den Winkel als auch den Abstand zur Probe zu variieren. Zur Beschichtung des Graphitsubstrates (in Figur 1 ist ein Graphitzylinder exemplarisch dargestellt) wurden ein Abstand von 19 cm und ein Einsprühwinkel von 90° gewählt. Die Innenseite des Graphit-Zylinders wurde aufgrund der zylindrischen Geometrie gemäß dem Aufbau nach Figur 1 beschichtet. Dazu wurde der Zylinder auf dem Rotationstisch fixiert und um 50° gekippt. Die Pistolenmündung befand sich in einem Abstand von 21 cm und in einem horizontalen Neigungswinkel von 70° (Figur 1). Die Außenseite wurde per Hand mittels Auf- und Abbewegungen senkrecht zur Zylinderwand und gleichzeitiger Drehung des Tisches beschichtet.

Um die Sinterdichte der entsprechenden Schichten zu bestimmen, wurde nach dem eigentlichen Sinterschritt die Masse, Dicke und Fläche der so entstandenen Schicht bestimmt, aus der Dicke und der Fläche das Schichtvolumen und aus Volumen und Masse die Sinterdichte berechnet und ins Verhältnis zur maximalen theoretischen Dichte von TaC (14.3 g/cm³) gesetzt. Für die Beschichtung aus Suspension 1 wurde eine Sinterdichte von 54 % erhalten und für die Beschichtung aus Suspension 2 betrug die Sinterdichte 56 %.

Über eine Querschnittsanalyse an den beschichteten und gesinterten Substraten konnte die Schichtdicke in beiden Fällen mittels Rasterelektronenmikroskopie und Auflichtmikroskopie bestimmt werden und betrug 100 µm.

## Patentansprüche

1. Verfahren zur Beschichtung eines Substrats umfassend die folgenden Schritte:
i) Bereitstellen eines Graphitsubtrats;
ii) Bereitstellen einer wässrigen Suspension enthaltend mindestens einen Tantalcarbid-Partikel und mindestens ein Dispergierungsmittel, wobei der Anteil des mindestens einen Tantalcarbid-Partikels im Bereich von 30 bis 95 Gew.-% bezogen auf das Gesamtgewicht der Suspension liegt;
iii) Aufbringen der Suspension aus Schritt ii) auf die Oberfläche des Graphitsubstrats aus Schritt i);
iv) Trocknung der aufgebrachten Suspension, wonach eine Beschichtung auf der Oberfläche des Graphitsubstrats entsteht.

2. Verfahren gemäß Anspruch 1, **dadurch gekennzeichnet, dass**
der mindestens eine Tantalcarbid-Partikel eine mittlere Korngröße im Bereich von 0.05 bis 25 µm, bevorzugt von 0.5 bis 5 µm und insbesondere bevorzugt von 1 bis 2 µm aufweist, und/oder,
der mindestens eine Tantalcarbid-Partikel einen Anteil an Einzelelementverunreinigungen von < 300 ppm, bevorzugt < 10 ppm und insbe-
sondere bevorzugt von < 1 ppm aufweist; und/oder das Dispergierungsmittel ausgewählt ist aus der Gruppe bestehend aus Polyacrylsäure, die bevorzugt ein zahlenmittleres Molekulargewicht im Bereich von 3000 bis 10000 g/mol und besonders bevorzugt von 4000 bis 6000 g/mol aufweist, Tetrabutylammoniumhydroxid und Mischungen davon.

3. Verfahren gemäß Anspruch 1 oder 2, **dadurch gekennzeichnet, dass**
die wässrige Suspension zumindest einen Zusatzstoff ausgewählt aus der Gruppe bestehend aus Basen, insbesondere Natronlauge, Entschäumern, insbesondere Fettalkoholpolyalkylenglykolethern, Sinterhilfsmitteln, insbesondere Kobalt oder Silicium, und Mischungen davon, enthält.

4. Verfahren gemäß einem der Ansprüche 1 bis 3, **dadurch gekennzeichnet, dass**
der Anteil der Tantalcarbid-Partikel im Bereich von 40 bis 90 Gew.-% und bevorzugt von 60 bis 85 Gew.-% bezogen auf das Gesamtgewicht der Suspension liegt; und/oder
der Anteil des Dispergierungsmittels im Bereich von 0,05 bis 5 Gew.-% und bevorzugt von 0,1 bis 2 Gew.-% bezogen auf das Gesamtgewicht der Suspension liegt; und/oder
der Anteil des mindestens einen Zusatzstoffes im Bereich von 0 bis 10 Gew.-% und bevorzugt von 0,5 bis 5 Gew.-% bezogen auf das Gesamtgewicht der Suspension liegt.

5. Verfahren gemäß einem der Ansprüche 1 oder 4, **dadurch gekennzeichnet, dass**
das Verfahren die folgenden weiteren Schritte enthält:
v) Vorbehandlung des in Schritt i) bereitgestellten Graphitsubstrats vor Schritt iii), wobei die Vorbehandlung bevorzugt durch eine Maßnahme ausgewählt aus der Gruppe bestehend aus mechanischem Aufrauen der Oberfläche, thermischer Vorbehandlung der Oberfläche, chemischer Behandlung der Oberfläche und Mischungen davon, sowie anschließender Reinigung, insbesondere im Ultraschallbad, erfolgt;
vi) Sintern der nach Schritt iv) erhaltenen Beschichtung.

6. Verfahren gemäß einem der Ansprüche 1 bis 5, **dadurch gekennzeichnet, dass**
das Aufbringen der Suspension in Schritt iii) durch Pinseln, Tauchen, oder Sprühen erfolgt.

7. Verfahren gemäß einem der Ansprüche 1 bis 6, **dadurch gekennzeichnet, dass**
Schritt iv) bei einer Temperatur im Bereich von 100 bis 600°C, bevorzugt von 120 bis 550°C und besonders bevorzugt von 145 bis 455°C durchgeführt wird, wobei es bevorzugt ist, dass Schritt iv) über einen Zeitraum von 5 bis 40 Stunden und besonders bevorzugt von 20 bis 30 Stunden durchgeführt wird, insbesondere bevorzugt ist ein Trocknungsprozess iv) bei dem die Temperatur stufenweise erhöht wird, wobei folgende Temperatur- und Zeitintervalle am bevorzugtesten sind:
(1) 140 bis 160°C für 2,5 bis 3,5 Stunden; dann
(2) 180 bis 220°C für 1,5 bis 2,5 Stunden; dann
(3) 2 Stunden verweilen bei der Temperatur aus (2); dann
(4) 200 bis 250°C für 1,5 bis 2,5 Stunden; dann
(5) 310 bis 350°C für 4,5 bis 5,5 Stunden; dann
(6) 330 bis 350°C für 1,5 bis 2,5 Stunden; dann
(7) 2 Stunden verweilen bei der Temperatur aus (6); dann
(8) 380 bis 420°C für 3,5 bis 4,5 Stunden; dann
(9) 430 bis 470°C für 1,5 bis 2,5 Stunden;
und/oder
Schritt vi) bei einer Temperatur im Bereich von 2000 bis 2600°C, bevorzugt von 2100 bis 2500°C und besonders bevorzugt von 2200 bis 2300°C durchgeführt wird, wobei es bevorzugt ist, dass Schritt vi) über einen Zeitraum von 1 bis 10 Stunden und besonders bevorzugt von 3 bis 5 Stunden durchgeführt wird; und/oder
Schritt vi) bei einem Druck im Bereich von 500 bis 900 Torr (6,66 × 10⁴ bis 12,0 × 10⁴ Pascal) bevorzugt von 600 bis 800 Torr (8,00 × 10⁴ bis 10,7 × 10⁴ Pascal) und insbesondere bevorzugt von 680 bis 720 Torr (9,07 × 10⁴ bis 9,60 × 10⁴ Pascal)
durchgeführt wird; und/oder
Schritt vi) unter Inertgas durchgeführt wird, wobei das Inertgas bevorzugt ausgewählt ist aus der Gruppe bestehend aus Helium, Argon, Stickstoff und Mischungen davon.

8. Verfahren gemäß einem der Ansprüche 1 bis 7, **dadurch gekennzeichnet, dass**
die Gründichte der Beschichtung nach Schritt iv) und/oder vor Schritt vi) mindestens 50 % und bevorzugt mindestens 60 % beträgt; und/oder die Beschichtung nach Schritt iv) oder vi) weniger als 300 ppm und bevorzugt weniger als 1 ppm an Verunreinigungen enthält; und/oder
die Beschichtung nach Schritt iv) oder vi) eine offene Porosität von kleiner 5 % und bevorzugt von kleiner 1 % aufweist.

9. Verfahren gemäß einem der Ansprüche 1 bis 8, **dadurch gekennzeichnet, dass**
die Dicke der Beschichtung nach Schritt iv) oder vi) im Bereich von 20 bis 500 µm, bevorzugt von 50 bis 400 µm und besonders bevorzugt von 100 bis 300 µm liegt; und/oder
der pH-Wert der wässrigen Suspension vor Schritt iii) im Bereich von 5 bis 10 und bevorzugt von 7 bis 8, insbesondere für Polyacrylsäure als Dispergierungsmittel, liegt.

## Claims

1. A process for coating a substrate comprising the following steps:
i) providing a graphite substrate;
ii) providing an aqueous suspension comprising at least one tantalum carbide particle and at least one dispersant, wherein the proportion of the at least one tantalum carbide particle is in the range from 30% to 95% by weight based on the total weight of the suspension;
iii) applying the suspension from step ii) to the surface of the graphite substrate from step i);
iv) drying the applied suspension, resulting in the formation of a coating on the surface of the graphite substrate.

2. The process as claimed in claim 1, **characterized in that**
the at least one tantalum carbide particle has an average particle size preferably in the range from 0.05 to 25 µm, more preferably from 0.5 to 5 µm, and particularly preferably from 1 to 2 µm and/or
the at least one tantalum carbide particle has a content of individual elemental impurities preferably of < 300 ppm, more preferably < 10 ppm, and particularly preferably of < 1 ppm; and/or
the dispersant is selected from the group consisting of polyacrylic acid, which preferably has a number-average molecular weight in the range from 3000 to 10 000 g/mol and more preferably from 4000 to 6000 g/mol, tetrabutylammonium hydroxide, and mixtures thereof.

3. The process as claimed in of claims 1 or 2, **characterized in that**
the aqueous suspension comprises at least one additive selected from the group consisting of bases, in particular sodium hydroxide solution, defoamers, in particular fatty alcohol polyalkylene glycol ethers, sintering aids, in particular cobalt or silicon, and mixtures thereof.

4. The process as claimed in any of claims 1 to 3, **characterized in that**
the proportion of the tantalum carbide particles is in the range from 40% to 90% by weight and preferably from 60% to 85% by weight, based on the total weight of the suspension; and/or
the proportion of the dispersant is in the range from 0.05% to 5% by weight and preferably from 0.1% to 2% by weight, based on the total weight of the suspension; and/or
the proportion of the at least one additive is in the range from 0% to 10% by weight and preferably from 0.5% to 5% by weight, based on the total weight of the suspension.

5. The process as claimed in any of claims 1 to 3, **characterized in that**
the process includes the following further steps:
v) pretreating the graphite substrate provided in step i) prior to step iii), with the pretreatment effected preferably by a measure selected from the group consisting of mechanical roughening of the surface, thermal pretreatment of the surface, chemical treatment of the surface, and mixtures thereof, and subsequent cleaning, in particular by means of sonication;
vi) sintering of the coating obtained after step iv).

6. The process as claimed in any of claims 1 to 5, **characterized in that** the suspension in step iii) is applied by painting, dipping or spraying.

7. The process as claimed in any of claims 1 to 6, **characterized in that**
step iv) is carried out at a temperature in the range from 100 to 600°C, preferably from 120 to 550°C, and more preferably from 145 to 455°C, with preference given to carrying out step iv) over a period of 5 to 40 hours and more preferably of 20 to 30 hours, particular preference being given to a drying process iv) in which the temperature is increased in stages, with the following temperature ranges and time intervals most preferred:
(1) 140 to 160°C for 2.5 to 3.5 hours; then
(2) 180 to 220°C for 1.5 to 2.5 hours; then
(3) held for 2 hours at the temperature from (2); then
(4) 200 to 250°C for 1.5 to 2.5 hours; then
(5) 310 to 350°C for 4.5 to 5.5 hours; then
(6) 330 to 350°C for 1.5 to 2.5 hours; then
(7) held for 2 hours at the temperature from (6); then
(8) 380 to 420°C for 3.5 to 4.5 hours; then
(9) 430 to 470°C for 1.5 to 2.5 hours;
and/or
step vi) is carried out at a temperature in the range from 2000 to 2600°C, preferably from 2100 to 2500°C, and more preferably from 2200 to 2300°C, with preference given to carrying out step vi) over a period of 1 to 10 hours and more preferably of 3 to 5 hours; and/or
step vi) is carried out at a pressure in the range from 500 to 900 torr (6,66 × 10⁴ bis 12,0 × 10⁴ Pascal), preferably from 600 to 800 torr torr (8,00 × 10⁴ bis 10,7 × 10⁴ Pascal), and more preferably from 680 to 720 torr torr (9,07 × 10⁴ bis 9,60 × 10⁴ Pascal); and/or
step vi) is carried out under inert gas, with the inert gas preferably being selected from the group consisting of helium, argon, nitrogen, and mixtures thereof.

8. The process as claimed in any of claims 1 to 7, **characterized in that**
the green density of the coating after step iv) and/or prior to step vi) is at least 50% and preferably at least 60%; and/or
the coating after step iv) or vi) has an impurity content of less than 300 ppm and preferably of less than 1 ppm; and/or
the coating after step iv) or vi) has an open porosity of less than 5% and preferably of less than 1%.

9. The process as claimed in any of claims 1 to 8, **characterized in that** the thickness of the coating after step iv) or vi) is in the range from 20 to 500 µm, preferably from 50 to 400 µm, and more preferably from 100 to 300 µm; and/or the pH of the aqueous suspension prior to step iii) is in the range from 5 to 10 and preferably from 7 to 8, particularly for polyacrylic acid as dispersant.

## Revendications

1. Procédé de revêtement d'un substrat comprenant les étapes suivantes :
i) préparation d'un substrat de graphite ;
ii) préparation d'une suspension aqueuse contenant au moins une particule de carbure de tantale et au moins un agent dispersant, dans lequel la proportion de l'au moins une particule de carbure de tantale est comprise entre 30 et 95 % en masse par rapport à la masse totale de la suspension ;
iii) application de la suspension de l'étape ii) sur la surface du substrat de graphite de l'étape i) ;
iv) séchage de la suspension appliquée, à la suite duquel un revêtement se forme à la surface du substrat de graphite.

2. Procédé selon la revendication 1, **caractérisé en ce que**
l'au moins une particule de carbure de tantale a une granulométrie moyenne comprise entre 0,05 et 25 µm, de préférence entre 0,5 et 5 µm et plus préférablement entre 1 et 2 µm, et/ou
l'au moins une particule de carbure de tantale présente une proportion d'impuretés monoéléments < 300 ppm, de préférence < 10 ppm et plus préférablement < 1 ppm ; et/ou
l'agent dispersant est choisi dans le groupe constitué par l'acide polyacrylique, dont la masse moléculaire moyenne en nombre est de préférence comprise entre 3 000 et 10 000 g/mol et plus préférablement entre 4 000 et 6 000 g/mol, l'hydroxyde de tétrabutylammonium et les mélanges de ceux-ci.

3. Procédé selon la revendication 1 ou 2, **caractérisé en ce que**
la suspension aqueuse contient au moins un additif choisi dans le groupe constitué par les bases, en particulier la soude caustique, les antimoussants, en particulier les polyalkylèneglycoléthers d'alcools gras, les agents de frittage, en particulier le cobalt ou le silicium, et les mélanges de ceux-ci.

4. Procédé selon l'une des revendications 1 à 3, **caractérisé en ce que**
la proportion de particules de carbure de tantale est comprise entre 40 et 90 % en masse, de préférence entre 60 et 85 % en masse, par rapport à la masse totale de la suspension ; et/ou
la proportion d'agent dispersant est comprise entre 0,05 et 5 % en masse, de préférence entre 0,1 et 2 % en masse, par rapport à la masse totale de la suspension ; et/ou
la proportion de l'au moins un additif est comprise entre 0 et 10 % en masse, de préférence entre 0,5 et 5 % en masse, par rapport à la masse totale de la suspension.

5. Procédé selon l'une des revendications 1 ou 4, **caractérisé en ce que** le procédé comprend en outre les étapes suivantes :
v) prétraitement du substrat de graphite préparé à l'étape i) avant l'étape iii), dans lequel le prétraitement est réalisé de préférence par un procédé choisi dans le groupe constitué par un grainage mécanique de la surface, un prétraitement thermique de la surface, un traitement chimique de la surface et les mélanges de ceux-ci, ainsi qu'un nettoyage ultérieur, en particulier dans un bain à ultrasons ;
vi) frittage du revêtement obtenu après l'étape iv).

6. Procédé selon l'une des revendications 1 à 5, **caractérisé en ce que**
l'application de la suspension à l'étape iii) se fait au pinceau, par immersion, ou par pulvérisation.

7. Procédé selon l'une des revendications 1 à 6, **caractérisé en ce que**
l'étape iv) est effectuée à une température comprise entre 100 et 600 °C, de préférence entre 120 et 550 °C, et plus préférablement entre 145 et 455 °C, dans lequel il est préférable que l'étape iv) soit réalisée sur une période de 5 à 40 heures et, plus préférablement, de 20 à 30 heures, un procédé de séchage iv) dans lequel la température augmente graduellement étant tout particulièrement à privilégier, dans lequel les intervalles de température et de temps suivants sont les plus souhaitables :
(1) 140 à 160 °C pendant 2,5 à 3,5 heures ; puis
(2) 180 à 220 °C pendant 1,5 à 2,5 heures ; puis
(3) 2 heures à la température de (2) ; puis
(4) 200 à 250 °C pendant 1,5 à 2,5 heures ; puis
(5) 310 à 350 °C pendant 4,5 à 5,5 heures ; puis
(6) 330 à 350 °C pendant 1,5 à 2,5 heures ; puis
(7) 2 heures à la température de (6) ; puis
(8) 380 à 420 °C pendant 3,5 à 4,5 heures ; puis
(9) 430 à 470 °C pendant 1,5 à 2,5 heures ;
et/ou
l'étape vi) est effectuée à une température comprise entre 2 000 et 2 600 °C, de préférence entre 2 100 et 2 500 °C, et plus préférablement entre 2 200 et 2 300 °C, dans lequel il est préférable que l'étape vi) soit réalisée sur une période de 1 à 10 heures et, plus préférablement, de 3 à 5 heures ; et/ou
l'étape vi) est effectuée à une pression comprise entre 500 et 900 torrs (6,66 × 10⁴ à 12,0 × 10⁴ pascals), de préférence entre 600 et 800 torrs (8,00 × 10⁴ à 10,7 × 10⁴ pascals) et, plus préférablement, entre 680 et 720 torrs (9,07 × 10⁴ à 9,60 × 10⁴ pascals) ; et/ou
l'étape vi) est effectuée sous gaz inerte, dans lequel le gaz inerte est de préférence choisi dans le groupe constitué par l'hélium, l'argon, l'azote et les mélanges de ceux-ci.

8. Procédé selon l'une des revendications 1 à 7, **caractérisé en ce que**
la densité à cru du revêtement après l'étape iv) et/ou avant l'étape vi) s'élève à au moins 50 % et de préférence à au moins 60 % ; et/ou le revêtement après l'étape iv) ou vi) contient moins de 300 ppm et de préférence moins d'1 ppm d'impuretés ; et/ou
le revêtement après l'étape iv) ou vi) présente une porosité ouverte inférieure à 5 % et de préférence inférieure à 1 %.

9. Procédé selon l'une des revendications 1 à 8, **caractérisé en ce que**
l'épaisseur du revêtement après l'étape iv) ou vi) est comprise entre 20 et 500 µm, de préférence entre 50 et 400 µm et plus préférablement entre 100 et 300 µm ; et/ou
le pH de la suspension aqueuse avant l'étape iii) est compris entre 5 et 10, de préférence entre 7 et 8, en particulier pour l'acide polyacrylique utilisé comme agent dispersant.
